# EUROPÄISCHE PATENTANMELDUNG

(11) **EP 0 627 570 A1**
(43) Veröffentlichungstag der Anmeldung: **07.12.1994**
(21) Anmeldenummer: 94106091.5
(22) Anmeldetag: 20.04.1994
(51) Int. Cl.: F16C 1/26, F16C 11/06

(54) **Anschlussteil für einen Betätigungszug**

(30) Priorität: 05.05.1993 DE 9306761 U; 14.01.1994 DE 9400555 U
(71) Anmelder: VOFA-WERK XAVIER VORBRÜGGEN GmbH & Co. KG, D-40549 Düsseldorf (DE)
(72) Erfinder:
(74) Vertreter: Paul, Dieter-Alfred, Dipl.-Ing.

(57) **Zusammenfassung**

Bei einem Anschlußteil (1) für einen Betätigungszug mit einer Muffe (2) für die Aufnahme eines Betätigungsmantels des Betätigungszuges ist die Muffe (2) über ein Gelenk (5, 6, 7) mit einem Führungsrohr (3) verbunden und ist ferner von einer Anschlußhülse (11) für die Festlegung des Betätigungszuges umgeben, welche formschlüssig mit der Muffe (2) verbunden ist. Erfindungsgemäß ist das Gelenk als Kugelgelenk mit Kugelgelenkkopf (7) und Kugelgelenkpfanne (6) als Kugelgelenkteile (5) ausgebildet und bestehen Kugelgelenkkopf (7) und/oder Kugelgelenkpfanne (6) aus einem Kunststoff und sind dabei derart elastisch ausgebildet, daß sie einrastend ineinander drückbar sind.

## Beschreibung

Die Erfindung betrifft ein Anschlußteil für einen Betätigungszug mit einer Muffe für die Aufnahme eines Betätigungsmantels des Betätigungszuges, wobei die Muffe über ein Gelenk mit einem Führungsrohr verbunden ist und ferner von einer Anschlußhülse für die Festlegung des Betätigungszuges umgeben ist, welche formschlüssig mit der Muffe verbunden ist.

Zur Betätigung von Einrichtungen insbesondere in Kraftfahrzeugen werden in einer Vielzahl von Anwendungsfällen sogenannte Betätigungszüge verwendet. Sie weisen jeweils einen flexiblen Betätigungsmantel und eine darin axial geführte Betätigungsseele - meist in Form eines als Seil oder Litze ausgebildeten Betätigungsdrahtes - auf, wobei die Betätigungsseele der Kraftübertragung dient.

In der Regel ist an beiden Enden des Betätigungsmantels ein Anschlußteil angeordnet, über die der Betätigungsmantel an Bauteilen, beispielsweise an der Karrosserie von Kraftfahrzeugen, festgelegt wird. Solche Bauteile können auch beweglich sein. Der Betätigungsdraht durchläuft die Anschlußteile und steht über diese nach außen vor, wobei er über Endstücke einerends mit dem Betätigungsorgan und anderenends mit dem zu betätigenden Organ verbunden werden kann.

Das gattungsmäßig bekannte Anschlußteil weist eine Muffe und ein sich daran in axialer Fortsetzung anschließendes Führungsrohr auf. Letzteres ist nicht nur für Führungsaufgaben geeignet, sondern ist auch in der Lage, Druckkräfte zu übertragen. Muffe und Führungsrohr sind über ein Gelenk miteinander verbunden, so daß das Führungsrohr nach allen Seiten um ca. 8°, bezogen auf die Achse des Führungsrohrs, auslenken kann. Die Muffe trägt außenseitig einen radial vorspringenden Ringsteg, der beidseitig von Dämpfungsringen aus elastomerem Material zum Zwecke der Geräuschentkopplung eingefaßt ist. In diesem Bereich ist die Muffe von einer Anschlußhülse umgeben, die die Dämpfungsringe umfaßt, so daß eine formschlüssige, jedoch axial elastische Verbindung zwischen Muffe und Anschlußhülse besteht. Die Anschlußhülse weist außenseitig Ringnuten auf, über die sie an einem Bauteil festgelegt werden kann.

Die bekannten Anschlußteile bestehen bis auf die Dämpfungsringe im wesentlichen aus Metall. Die Herstellung der Einzelteile ist deshalb aufwendig. Dies gilt auch für deren Zusammenbau, denn für die Verbindung von Muffe und Führungsrohr ist es erforderlich, Teile des Gelenks umzubördeln, um die Gelenkverbindung herzustellen. Entsprechendes gilt für die Anschlußhülse. Auch hier müssen Teile der Anschlußhülse zum Einfassen der Dämpfungsringe umgebördelt werden. Dies ist zeit- und damit kostenaufwendig. Schließlich hat die metallische Ausbildung des Anschlußteils ein hohes Gewicht zur Folge.

Der Erfindung liegt die Aufgabe zugrunde, ein Anschlußteil der eingangs genannten Art so auszubilden, daß es wesentlich kostengünstiger herstellbar ist und ein geringeres Gewicht hat.

Diese Aufgabe wird erfindungsgemäß dadurch gelöst, daß das Gelenk als Kugelgelenk mit Kugelgelenkkopf und Kugelgelenkpfanne ausgebildet ist und daß Kugelgelenkkopf und/oder Kugelgelenkpfanne aus einem Kunststoff bestehen und dabei derart elastisch ausgebildet sind, daß sie einrastend ineinander drückbar sind.

Nach der Erfindung wird eine erste Erleichterung der Montage dadurch erreicht, daß das Gelenk als Kugelgelenk ausgebildet wird, wobei zumindest eines der Kugelgelenkteile, besser noch beide so elastisch ausgebildet sind, daß sie vorzugsweise von Hand ineinander gedrückt werden können, wobei sie dann einrasten. Die hierfür notwendige Elastizität läßt sich durch Verwendung von geeigneten Kunststoffmaterialien - hier kommt insbesondere Polyamid infrage - herstellen, wobei vorzugsweise beide Kugelgelenkteile, also Kugelgelenkkopf und Kugelgelenkpfanne, aus Kunststoff bestehen, um die nötige Elastizität zu erreichen und Gewichte zu sparen. Dabei sollte das Führungsrohr den Kugelgelenkkopf und die Muffe die Kugelgelenkpfanne tragen.

Um weiteres Gewicht zu sparen und die Herstellungskosten gering zu halten, sollten das Führungsrohr oder die Muffe oder sogar beide vollständig aus Kunststoff bestehen. Für die Muffe kann es jedoch auch zweckmäßig sein, daß sie einen Metallmantel aufweist, auf dessen Ende eines der beiden Kugelgelenkteile aus Kunststoff aufgesetzt, beispielsweise aufgespritzt ist. Diese Ausbildung ist insbesondere dann zweckmäßig, wenn die Muffe auf den Betätigungsmantel aufgepreßt werden soll, um eine feste Verbindung mit diesem herzustellen. Dabei sollte das Kugelgelenkteil die Muffe teilweise umgeben, wobei Kugelgelenkteil und Muffe formschlüssig ineinandergreifen, beispielsweise über sich in Umfangsrichtung erstreckende Vorsprünge.

In an sich bekannter Weise sollte das Kugelgelenkteil wenigstens einen radial nach außen vorstehenden Vorsprung, beispielsweise einen Ringsteg, aufweisen, der formschlüssig in die Anschlußhülse einfaßt. Die Anschlußhülse besteht zweckmäßigerweise aus einem ersten und einem zweiten Hülsenteil, die in axialer Richtung zusammengesetzt sind und beide den Vorsprung bzw. die Vorsprünge einfassen und miteinander verbunden sind. Die Verbindung der Hülsenteile geschieht vorzugsweise über Rasteinrichtungen, die in Verbindungsrichtung leicht ineinanderfassen, jedoch in entgegengesetzter Richtung nur schwer zu trennen sind. Dabei sollte das muffenseitige Hülsenteil kappenförmig ausgebildet sein und das führungsrohrseitige Hülsenteil Einrichtungen für die Festlegung der Anschlußhülse beispielsweise an einem Karrosserieteil tragen.

In besonders bevorzugter Ausbildung sollte auch die Anschlußhülse aus Kunststoff hergestellt sein, um Gewicht zu sparen.

In an sich bekannter Weise ist es zweckmäßig, daß zwischen Vorsprung bzw. Vorsprüngen und Anschlußhülse Dämpfelemente aus einem Elastomer oder Kautschukmaterial, zweckmäßigerweise als Dämpfringe ausgebildet, vorgesehen sind, um eine Geräuschübertragung zu vermeiden.

Die Festlegung des Anschlußteils innerhalb eines ortsfesten oder beweglichen Systems erfolgt in einfacher Weise dadurch, daß auf der Außenseite der Anschlußhülse eine Ringnut vorgesehen ist, über die das Anschlußteil im Ausschnitt eines Blechteils eingehängt wird. Um ein solches Anschlußteil auch innerhalb eines Loches in einem solchen Blechteil befestigen zu können, ist nach der Erfindung vorgesehen, daß die Anschlußhülse außenseitig radial nach innen bewegliche Rastelemente und wenigstens einen diesen gegenüberliegenden Anschlag aufweist. Die Anschlußhülse kann dann frontal durch ein Loch in einem Blechteil geschoben werden, wobei zunächst die Rastelemente ausweichen. Wenn der Lochrand an dem Anschlag zur Anlage kommt, schnappen die Rastelemente zurück, wodurch es zu einer axialen Fixierung kommt.

Die Rastelemente können verschiedenartig ausgebildet sein. Vorzugsweise sollten sie als in Richtung auf den Anschlag schräg nach außen gerichtete, federnde Raststege ausgebildet sein, die nach dem Einschnappen den Lochrand hinterfassen. Eine Demontage ist durch Verbiegen der Raststege von Hand immer möglich.

Der Anschlag ist in einfachster Ausführung als Ringsteg ausgebildet. Er sollte zweckmäßigerweise in der Ebene des Kugelgelenks liegen.

Damit das Anschlußteil spielfrei innerhalb des Loches in dem Blechteil gehalten ist, sollte der Anschlag in Richtung auf die Rastelemente vorspringende Federelemente aufweisen. Diese verspannen das Anschlußteil innerhalb des Loches so, daß es zwischen den Federelementen und den Rastelementen gehalten ist. Dabei können die Federelemente als aus der Ebene des Anschlags schräg vorspringende Federlippen ausgebildet sein. Dabei sollte wenigstens ein Paar von zwei gegeneinander gerichteten Federlippen vorgesehen sein. Es können aber auch mehrere solcher Paare über den Umfang des Anschlags verteilt angeordnet sein.

Die Anschlußhülse ist nach einem weiteren Merkmal der Erfindung als einteiliges Kunststoffteil ausgebildet, wobei die Kugelgelenkpfanne in dieses Kunststoffteil eingeformt ist.

In der Zeichnung ist die Erfindung an Hand eines Ausführungsbeispiels näher veranschaulicht. Es zeigen:
- Figur (1): ein erstes Anschlußteil in der oberen Hälfte im Axialschnitt und in der unteren Hälfte in der Seitenansicht;
- Figur (2): ein zweites Anschlußteil mit teilweisem Axialschnitt und
- Figur (3): eine Seitenansicht der Anschlußhülse des Anschlußteils gemäß Figur (2).

Das Anschlußteil (1) gemäß Figur (1) weist eine Metallmuffe (2) und ein sich daran in axialer Fortsetzung anschließendes Führungsrohr (3) auf. Bei der Befestigung des Anschlußteils (1) am Ende eines Betätigungszuges wird dessen Betätigungsmantel in die Metallmuffe (2) eingeschoben und die Metallmuffe (2) dann radial nach innen verpreßt, so daß sich eine feste Verbindung zwischen Metallmuffe (2) und Betätigungsmantel ergibt. Der durch den Betätigungsmantel gehende Betätigungsdraht wird durch die Metallmuffe (2) und das Führungsrohr (3) nach außen geführt und dort mit einem Endstück versehen, über das der Betätigungsdraht dann mit entweder einem Betätigungsorgan oder einem zu betätigenden Organ verbunden werden kann.

Die Metallmuffe (2) weist an ihrem dem Führungsrohr (3) benachbarten Ende eine sich radial nach außen öffnende Ringnut (4) auf. Über diese Ringnut (4) ist ein aus Polyamid bestehendes Kugelgelenkteil (5) gespritzt. Es faßt formschlüssig in die Ringnut (4) ein und steht über das Ende der Metallmuffe (2) in Richtung des Führungsrohrs (3) vor, um dort eine ringförmige Kugelgelenkpfanne (6) zu bilden.

In die Kugelgelenkpfanne (6) faßt das verdickt und außenseitig sphärisch als Kugelgelenkkopf (7) ausgebildete Ende des Führungsrohrs (3) ein. Kugelgelenkkopf (7) und der übrige Teil des Führungsrohrs (3) bestehen dabei ebenfalls aus Kunststoff, beispielsweise Polyamid. Kugelgelenkpfanne (6) und Kugelgelenkkopf (7) sind in radialer Richtung hinsichtlich ihrer Elastizität derart aufeinander abgestimmt, daß sie bei der Montage von Hand ineinandergesteckt werden können und dabei so ineinander einrasten, daß ein Auseinanderziehen nur schwer möglich ist. Dabei ermöglichen Kugelgelenkteil (5) und Kugelgelenkpfanne (6) eine Auslenkung bzw. Schrägstellung des Führungsrohrs (3) in Bezug auf die Achse der Metallmuffe (2) um einen Winkel von 8° nach allen Seiten hin.

Im Bereich des führungsrohrseitigen Endes der Metallmuffe (2) weist das Kugelgelenkteil (5) einen radial nach außen vorstehenden Ringsteg (8) auf. Der Ringsteg (8) wird beidseitig von Dämpfungsringen (9, 10̸) eingefaßt, die aus einem Elastomermaterial bestehen. Die Dämpfungsringe (9, 10̸) sind von einer Anschlußhülse (11) umgeben, die in axialer Richtung zweiteilig aufgebaut ist und aus einem Hülsenteil (12) und einem Kappenteil (13) besteht. Das Hülsenteil (12) weist an dem führungsrohrseitigen Ende außenseitig Ringnuten (14, 15) auf, die für die Aufnahme an Bauteilen zwecks Festlegung des Anschlußteils (1) bestimmt sind.

Innenseitig faßt das Hülsenteil (12) mittels eines Absatzes (16) den linksseitigen Dämpfungsring (9) ein. Das Hülsenteil (12) erstreckt sich dann über beide Dämpfungsringe (9, 10̸). Außenseitig weist das Hülsenteil (12) über den Umfang verteilt mehrere, im Querschnitt keilförmige Nocken auf, die vom rechtsseitigen Ende hin schräg ansteigen und dann senkrecht abfallen.

Das Kappenteil (13) hat einen radial nach innen gehenden Ringsteg (19), der innenseitig den rechtsseitigen Dämpfungsring (10̸) einfaßt. An den Ringsteg (19) schließt sich ein Kappenmantel (20̸) an, der durch zum Ende hin offene und über den Umfang verteilte Schlitze (21, 22) in Mantelsegmente aufgeteilt ist. In Umfangsrichtung gesehen hat jedes zweite Mantelsegment des Kappenmantels (20̸) eine Rastöffnung (23, 24, 25), in die die Nocken (17, 18) einfassen.

Die Montage des Anschlußteils (1) erfolgt in der Weise, daß über die Metallmuffe (2) und deren Kugelgelenk (5) von beiden Seiten des Ringsteges (8) her die Dämpfungsringe (9, 10̸) aufgeschoben und in Anlage zu dem Ringsteg (8) gebracht werden. Dann wird der Kugelgelenkkopf (7) des Führungsrohrs (3) in die Kugelgelenkpfanne (6) eingedrückt. Anschließend wird das Hülsenteil (12) der Anschlußhülse (11) über das Führungsrohr (3) bis zu dem Dämpfungsring (9) und über diesen hinweg bis zur gezeigten Position aufgeschoben. Schließlich wird von der anderen Seite, also über die Metallmuffe (2) hinweg, das Kappenteil (13) auf das Hülsenteil (12) aufgeschoben. Beim Auflaufen der mit den Rastöffnungen (23, 24, 25) versehenen Mantelsegmente auf die Nocken (17, 18) werden die Mantelsegmente des Kappenmantels (20̸) entsprechend aufgeweitet und schnappen nach Überfahren der Nocken (17, 18) zurück. Der Ringsteg (19) kommt dabei zur Anlage an den rechtsseitigen Dämpfungsring (10̸). Die Nocken (17, 18) verhindern mittels ihrer senkrecht verlaufenen Abschnitte ein Lösen des Kappenteils (13) von dem Hülsenteil (12).

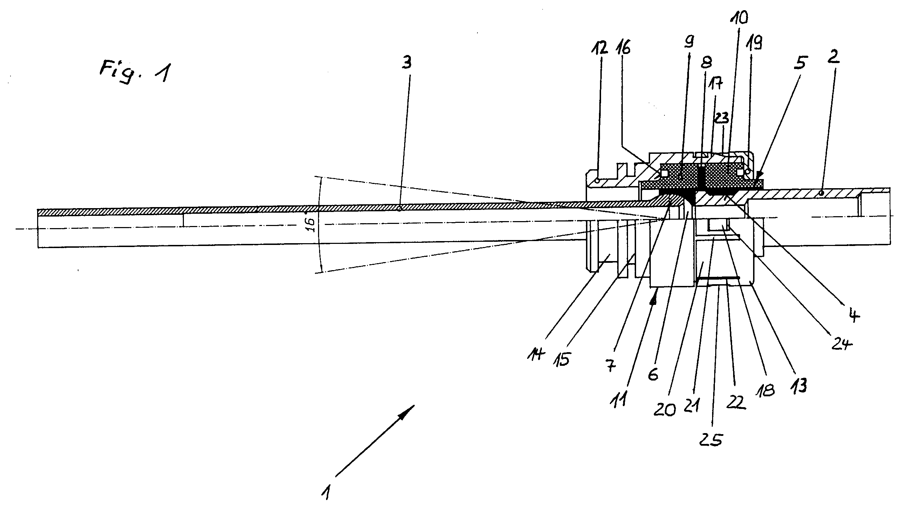

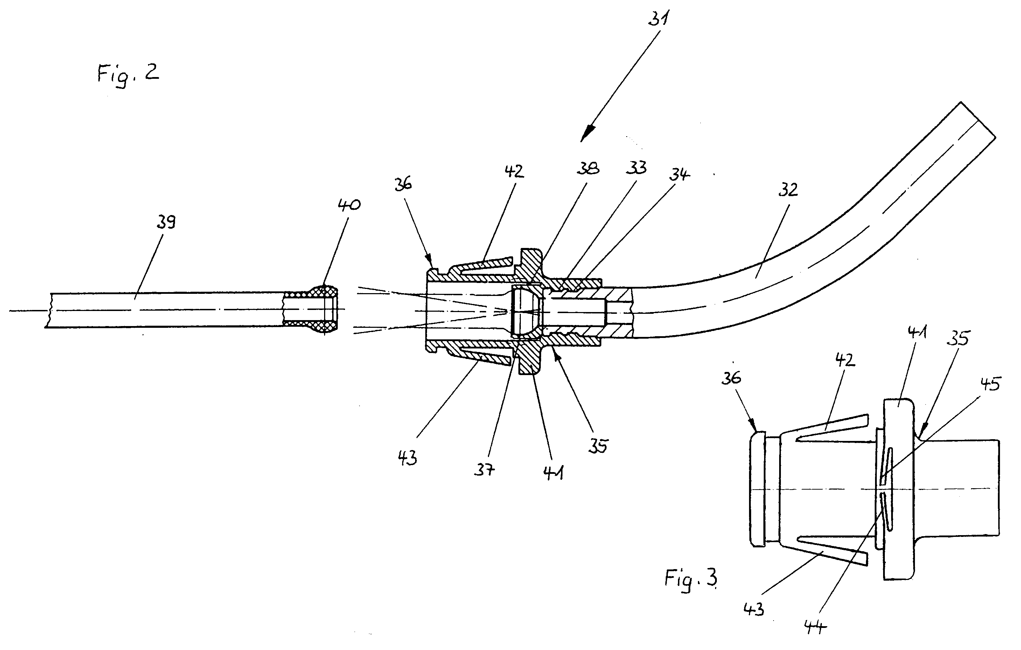

Das in Figur (2) dargestellte Anschlußteil (31) hat eine hier gebogen ausgeführte Metallmuffe (32), das der Aufnahme des Endes eines Betätigungsmantels eines Betätigungszuges dient. Die Metallmuffe (32) weist an ihrem anschlußteilseitigen Ende umfangseitig zwei Ringnuten (33, 34) auf, über die eine einteilige Anschlußhülse (35) gespritzt ist, welche in Figur 2 im Schnitt und in Figur 3 in der Seitenansicht gezeigt ist. Die Anschlußhülse (35) faßt formschlüssig in die Ringnuten (33, 34) ein und hat einen über das Ende der Metallmuffe (32) vorstehenden Hülsenfortsatz (36).

Innenseitig im unmittelbaren Anschluß an das innenseitige Ende der Metallmuffe (32) ist eine Kugelgelenkpfanne (37) eingeformt, und zwar derart, daß ein ringförmiger Spalt (38) zwischen der Außenseite der Kugelgelenkpfanne (37) und der Innenseite des Hülsenfortsatzes (36) frei bleibt. Die Kugelgelenkpfanne (37) dient der Aufnahme eines Führungsrohrs (39), welches hier getrennt von der Anschlußhülse (35) - also in noch nicht montiertem Zustand - gezeigt ist. Das Führungsrohr (39) hat hierzu endseitig einen Kugelgelenkkopf (40̸). Kugelgelenkpfanne (37) und Kugelgelenkkopf (40̸) sind in radialer Richtung hinsichtlich ihrer Elastizität derart aufeinander abgestimmt, daß sie bei der Montage von Hand ineinandergesteckt werden können und dabei so ineinander einrasten, daß ein Auseinanderziehen nur schwer möglich ist. Dabei ermöglichen Kugelgelenkpfanne (37) und Kugelgelenkkopf (40̸) eine Auslenkung bzw. Schrägstellung des Führungsrohrs (39) in bezug auf die Achse der Anschlußhülse (35).

Über die Außenseite der Anschlußhülse (35) steht in der Ebene der Kugelgelenkpfanne (37) ein Anschlagringsteg (41) vor. Er hat - wie die Außenseite des Hülsenfortsatzes (36) - einen quadratischen Umfang. Gegenüber dem Anschlagringsteg (41) stehen von zwei gegenüberliegenden Seiten der Anschlußhülse (35) Raststege (42, 43) vor. Sie sind zum freien Ende des Hülsenfortsatzes (36) hin an diesem angeformt und verlaufen in einem spitzen Winkel schräg nach außen. Sie enden in einem definierten Abstand zu der gegenüberliegenden Anschlagseite des Anschlagringsteges (41). Sie können elastisch radial nach innen federn.

Wie nur aus Figur 3 zu ersehen ist, weist der Anschlagringsteg (41) auf zwei gegenüberliegenden Seiten jeweils ein Paar von Federlippen (44, 45) auf, die gegeneinander gerichtet sind und aus der Ebene der Anschlagseite des Anschlagringstegs (41) unter spitzem Winkel schräg nach außen vorstehen, und zwar in Richtung auf die Raststege (42, 43). Die Federlippen (44, 45) sind biegsam ausgebildet und dienen als Spielausgleich.

Die Festlegung des Anschlußteils (31) geschieht - nach Montage des Führungsrohrs (39) durch Einschnappen von dessen Kugelgelenkkopf (40̸) in die Kugelgelenkpfanne (37) - dadurch, daß zunächst das Führungsrohr (39) und dann auch der Hülsenfortsatz (36) der Anschlußhülse (35) in ein passendes Loch einer Blechscheibe eingeführt werden. Dabei werden die Raststege (42, 43) radial nach innen verschwenkt, bis der Lochrand des Blechteils an dem Anschlagringsteg (41) zur Anlage kommt. Da der Abstand zwischen den freien Enden der Raststege (42, 43) und der Anschlagfläche des Anschlagringsteges (41) geringfügig größer ist als die Dicke des zugehörigen Blechteils ist, federn die Raststege (42, 43) radial nach außen wieder zurück und hinterfassen dabei den Lochrand. Hierdurch wird das Anschlußteil (31) festgelegt. Dabei wird ein eventuelles Spiel durch die Federvorspannung der Federlippen (44, 45) ausgeglichen, so daß das Anschlußteil (31) einen spielfreien Sitz innerhalb des Loches des Blechteils hat.

Im übrigen durchzieht die Metallmuffe (32) und das Führungsrohr (39) der Betätigungsdraht des Betätigungszuges in der gleichen Weise wie zu dem Ausführungsbeispiel gemäß Figur (1) beschrieben.

## Patentansprüche

1. Anschlußteil (1) für einen Betätigungszug mit einer Muffe (2) für die Aufnahme eines Betätigungsmantels des Betätigungszuges, wobei die Muffe (2) über ein Gelenk (5, 6, 7) mit einem Führungsrohr (3) verbunden ist und ferner von einer Anschlußhülse (11) für die Festlegung des Betätigungszuges umgeben ist, welche formschlüssig mit der Muffe (2) verbunden ist,
dadurch gekennzeichnet, daß das Gelenk als Kugelgelenk mit Kugelgelenkkopf (7) und Kugelgelenkpfanne (6) als Kugelgelenkteile (5) ausgebildet ist und daß Kugelgelenkkopf (7) und/oder Kugelgelenkpfanne (6) aus einem Kunststoff bestehen und dabei derart elastisch ausgebildet sind, daß sie einrastend ineinander drückbar sind.

2. Anschlußteil nach Anspruch 1,
dadurch gekennzeichnet, daß das Führungsrohr (3) den Kugelgelenkkopf (7) und die Muffe (2) die Kugelgelenkpfanne (6) tragen.

3. Anschlußteil nach Anspruch 1 oder 2,
dadurch gekennzeichnet, daß das Führungsrohr (3) und/oder die Muffe (2) vollständig aus Kunststoff bestehen.

4. Anschlußteil nach einem der Ansprüche 1 bis 3,
dadurch gekennzeichnet, daß die Muffe (2) einen Metallmantel aufweist, auf dessen Ende eines der beiden Kugelgelenkteile (5) aus Kunststoff aufgesetzt ist.

5. Anschlußteil nach Anspruch 4,
daß das Kugelgelenteil (5) die Muffe (2) teilweise umgibt, wobei Kugelgelenkteil (5) und Muffe (2) formschlüssig ineinandergreifen.

6. Anschlußteil nach Anspruch 5,
dadurch gekennzeichnet, daß das Kugelgelenkteil (5) und die Muffe (2) über sich in Umfangsrichtung erstreckende Vorsprünge (4) ineinandergreifen.

7. Anschlußteil nach einem der Ansprüche 1 bis 6,
dadurch gekennzeichnet, daß das Kugelgelenkteil (5) wenigstens einen radial nach außen vorstehenden Vorsprung (8) aufweist, der formschlüssig in die Anschlußhülse (11) einfaßt.

8. Anschlußteil nach einem der Ansprüche 1 bis 7,
dadurch gekennzeichnet, daß die Anschlußhülse (11) aus einem ersten und einem zweiten Hülsenteil (12, 13) axial zusammengesetzt sind, die beide den Vorsprung (8) bzw. die Vorsprünge einfassen und miteinander verbunden sind.

9. Anschlußteil nach Anspruch 8,
dadurch gekennzeichnet, daß die Hülsenteile (12, 13) über Rasteinrichtungen (17, 18, 23, 24, 25) miteinander verbunden sind.

10. Anschlußteil nach Anspruch 8 oder 9,
dadurch gekennzeichnet, daß das muffenseitige Hülsenteil (13) kappenförmig ausgebildet ist und das führungsrohrseitige Hülsenteil (12) Einrichtungen (14, 15) für die Festlegung der Anschlußhülse (11) trägt.

11. Anschlußteil nach einem der Ansprüche 8 bis 10,
dadurch gekennzeichnet, daß die Anschlußhülse (11) aus Kunststoff besteht.

12. Anschlußteil nach Anspruch 7 und einem der Ansprüche 8 bis 11,
dadurch gekennzeichnet, daß zwischen Vorsprung (8) bzw. Vorsprüngen und Anschlußhülse (11) Dämpfelemente (9, 10̸) angeordnet sind.

13. Anschlußteil nach Anspruch 12,
dadurch gekennzeichnet, daß die Dämpfelemente (9, 10̸) aus Elastomer- oder Kautschukmaterial bestehen.

14. Anschlußteil nach Anspruch 12 oder 13,
dadurch gekennzeichnet, daß die Dämpfelemente als Dämpfungsringe (9, 10̸) ausgebildet sind.

15. Anschlußteil nach einem der Anschlüsse 1 bis 14,
dadurch gekennzeichnet, daß die Anschlußhülse (35) außenseitig radial nach innen bewegliche Rastelemente (42, 43) und wenigstens einen diesen gegenüberliegenden Anschlag (41) aufweist.

16. Anschlußteil nach Anspruch 15,
dadurch gekennzeichnet, daß die Rastelemente (42, 43) als in Richtung auf den Anschlag (41) schräg nach außen gerichtete, federnde Raststege (42, 43) ausgebildet sind.

17. Anschlußteil nach Anspruch 15 oder 16,
dadurch gekennzeichnet, daß der Anschlag als Ringsteg (41) ausgebildet ist.

18. Anschlußteil nach Anspruch 17,
dadurch gekennzeichnet, daß der Ringsteg (41) in der Ebene des Kugelgelenks (37, 40̸) liegt.

19. Anschlußteil nach einem der Ansprüche 15 bis 18,
dadurch gekennzeichnet, daß der Anschlag (41) in Richtung auf die Rastelemente (42, 43) vorspringende Federelemente (44, 45) aufweist.

20. Anschlußteil nach Anspruch 19,
dadurch gekennzeichnet, daß die Federelemente als aus der Ebene des Anschlags (41) schräg vorspringende Federlippen (44, 45) ausgebildet sind.

21. Anschlußteil nach Anspruch 20̸,
dadurch gekennzeichnet, daß wenigstens ein Paar von zwei gegeneinander gerichteten Federlippen (44, 45) vorgesehen sind.

22. Anschlußteil nach einem der Ansprüche 1 bis 6 und 15 bis 21,
dadurch gekennzeichnet, daß die Anschlußhülse (35) als einteiliges Kunststoffteil mit darin eingeformter Kugelgelenkpfanne (37) ausgebildet ist.
